(19) Europäisches Patentamt / European Patent Office / Office européen des brevets

(11) **EP 4 357 836 A1**

(12) **EUROPEAN PATENT APPLICATION**
published in accordance with Art. 153(4) EPC

(43) Date of publication:
**24.04.2024 Bulletin 2024/17**

(21) Application number: **22824638.5**

(22) Date of filing: **30.03.2022**

(51) International Patent Classification (IPC):
**G02B 27/01** (2006.01)  **B60R 11/02** (2006.01)
**G02B 27/02** (2006.01)

(52) Cooperative Patent Classification (CPC):
**B60R 11/02; G02B 27/01; G02B 27/02**

(86) International application number:
**PCT/JP2022/016246**

(87) International publication number:
**WO 2022/264642 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.06.2021 JP 2021098795**

(71) Applicant: **Panasonic Intellectual Property
Management Co., Ltd.
Kadoma-shi, Osaka 571-0057 (JP)**

(72) Inventors:
• **MINAMI, Kazuhiro**
  **Osaka 571-0057 (JP)**
• **KUZUHARA, Satoshi**
  **Osaka 571-0057 (JP)**

(74) Representative: **Eisenführ Speiser
Patentanwälte Rechtsanwälte PartGmbB
Postfach 10 60 78
28060 Bremen (DE)**

(54) **IMAGE DISPLAY DEVICE AND HEAD-UP DISPLAY SYSTEM**

(57) An image display device includes a display, a light guide body, a controller, and a sensor. The display emits a light flux that forms an image visually recognized by an observer as a virtual image. The light guide body guides the light flux to a light-transmitting member. The controller controls the image displayed by the display. The sensor that detects a physical quantity used to obtain a wavelength of the light flux. The light guide body includes an incident surface on which the light flux from the display is incident and an emission surface from which the light flux is emitted from the light guide body. The light flux incident on the incident surface of the light guide body is changed in a traveling direction in the light guide body, and is emitted from the emission surface so as to expand a visual field area by being replicated in a horizontal direction and a vertical direction of the virtual image visually recognized by the observer. The controller controls a position and a shape of the image displayed by the display based on the physical quantity detected by the sensor.

EP 4 357 836 A1

Fig.6

**Description**

TECHNICAL FIELD

The present disclosure relates to an image display device and a head-up display system including the image display device to display a virtual image.

BACKGROUND ART

Conventionally, a head-up display system includes an image display device that displays an image. A head-up display system is a vehicle information projection system that performs augmented reality (AR) display using an image display device. For example, the head-up display device projects light representing a virtual image on a windshield of a vehicle to allow a driver to visually recognize the virtual image together with a real view of an outside world of the vehicle.

As a device for displaying a virtual image, Patent Document 1 describes an optical element including a waveguide (light guide body) for expanding an exit pupil in two directions. The optical element may utilize a diffractive optical element to expand the exit pupil. In addition, Document 2 describes a head-mounted display that performs augmented reality (AR) display using a volume hologram diffraction grating.

PRIOR ART DOCUMENTS

PATENT DOCUMENTS

Patent Document 1: US Patent No. 10429645
Patent Document 2: WO 2018/198587 A

SUMMARY OF THE INVENTION

PROBLEMS TO BE SOLVED BY THE INVENTION

However, when the wavelength of the light emitted from the image display device changes, distortion occurs in the displayed virtual image.

An object of the present disclosure is to provide an image display device and a head-up display system that reduce distortion of a virtual image.

SOLUTIONS TO THE PROBLEMS

An image display device of the present disclosure includes: a display that emits a light flux that forms an image visually recognized by an observer as a virtual image; a light guide body that guides the light flux to a light-transmitting member; a controller that controls the image displayed by the display; and a sensor that detects a physical quantity used to obtain a wavelength of the light flux. The light guide body includes an incident surface on which the light flux from the display is incident and an emission surface from which the light flux is emitted from the light guide body. The light flux incident on the incident surface of the light guide body is changed in a traveling direction in the light guide body, and is emitted from the emission surface so as to expand a visual field area by being replicated in a horizontal direction and a vertical direction of the virtual image visually recognized by the observer. The controller controls a position and a shape of the image displayed by the display based on the physical quantity detected by the sensor.

Further, a head-up display system of the present disclosure includes: the above-described image display device; and the light-transmitting member that reflects a light flux emitted from the light guide body, in which the head-up display system displays the virtual image so as to be superimposed on a real view visually recognizable through the light-transmitting member.

EFFECTS OF THE INVENTION

According to the image display device and the head-up display system of the present disclosure, it is possible to reduce the distortion of the virtual image.

BRIEF DESCRIPTION OF THE DRAWINGS

Fig. 1 is a schematic perspective view illustrating a configuration of a light guide body.
Fig. 2 is an explanatory view illustrating directions of incident light and emission light to the light guide body of a head-mounted display.
Fig. 3 is an explanatory view illustrating directions of incident light and emission light to the light guide body of the head-up display.
Fig. 4A is an explanatory view illustrating an optical path of a light flux emitted from a display.
Fig. 4B is an explanatory diagram illustrating an example of an image displayed on the display.
Fig. 4C is an explanatory diagram illustrating an example of a virtual image viewed by an observer.
Fig. 5A is an explanatory diagram illustrating an optical path of a light flux in a case where a wavelength of the light flux emitted from the display changes.
Fig. 5B is an explanatory diagram illustrating an example of a virtual image in which a wavelength of a light flux is distorted due to a change.
Fig. 6 is a YZ plane cross-sectional view of a vehicle on which a head-up display system of an embodiment is mounted.
Fig. 7 is an explanatory view illustrating an optical path of the light flux emitted from the display.
Fig. 8A is a see-through perspective view illustrating a configuration of the light guide body.
Fig. 8B is a see-through perspective view of the light guide body illustrating an optical path on which the light flux emitted from the display is incident on a sensor.

Fig. 9A is a graph illustrating an example of characteristics of the sensor.

Fig. 9B is a graph illustrating an example of characteristics of the sensor.

Fig. 9C is an explanatory diagram illustrating a change in the amount of incident light depending on the position of the sensor.

Fig. 9D is a graph illustrating an example of characteristics of the sensor.

Fig. 10 is a flowchart illustrating a flow of image correction processing.

Fig. 11 is an explanatory diagram illustrating a change in an optical path of the light flux emitted from the display by image correction.

Fig. 12 is an explanatory diagram illustrating the change in the optical path of the light flux emitted from the display by image correction.

Fig. 13 is an explanatory diagram for explaining a change in an image displayed on the display by image correction.

Fig. 14 is an explanatory diagram illustrating an example in which dots are displayed as a virtual image.

Fig. 15 is a table illustrating an angle at which each dot is visible as a virtual image by a light flux of a certain wavelength.

Fig. 16 is a table illustrating an angle at which each dot can be seen as a virtual image when the wavelength of the light flux changes for a long time.

Fig. 17 is a table illustrating a changed angle difference of each dot as a virtual image due to a change in wavelength of the light flux.

Fig. 18A is a configuration diagram illustrating a configuration of a light detector of a first modification of a first embodiment.

Fig. 18B is a configuration diagram illustrating the configuration of the light detector of the first modification of the first embodiment.

Fig. 18C is a configuration diagram illustrating the configuration of the light detector of the first modification of the first embodiment.

Fig. 19A is a configuration diagram illustrating a configuration of a light detector of a second modification of the first embodiment.

Fig. 19B is a configuration diagram illustrating the configuration of the light detector of the second modification of the first embodiment.

Fig. 19C is a configuration diagram illustrating the configuration of the light detector of the second modification of the first embodiment.

Fig. 20A is a configuration diagram illustrating a configuration of a light detector of a third modification of the first embodiment.

Fig. 20B is a configuration diagram illustrating the configuration of the light detector of the third modification of the first embodiment.

Fig. 21 is a configuration diagram illustrating a configuration of a light detector of a fourth modification of the first embodiment.

Fig. 22 is a configuration diagram illustrating a configuration of an image display device in a second embodiment.

Fig. 23 is a graph illustrating a relationship between a temperature and a wavelength of a semiconductor laser.

Fig. 24 is a flowchart illustrating a flow of image correction processing in a third embodiment.

## DETAILED DESCRIPTION

(Outline of present disclosure)

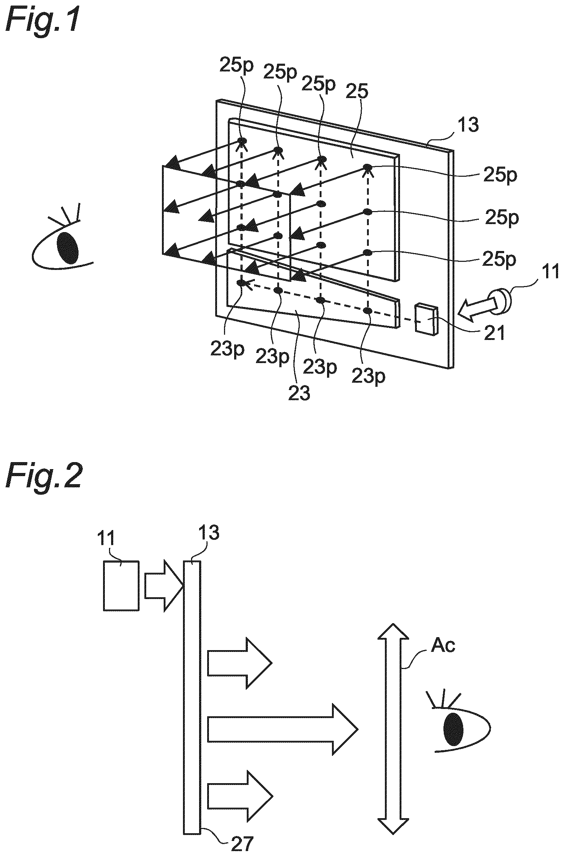

First, an outline of the present disclosure will be described with reference to Fig. 1. Fig. 1 is a schematic view illustrating a configuration of a light guide body 13. In an image display device 2 used in a head mounted display (hereinafter, referred to as an HMD) or the like, a so-called pupil expansion type light guide body 13 is used. The pupil expansion type light guide body 13 includes a coupling region 21 where image light from a display 11 is incident to change a traveling direction, a first expansion region 23 that expands in a first direction, and a second expansion region 25 that expands in a second direction. The first direction and the second direction may intersect each other, for example, may be orthogonal.

The coupling region 21, the first expansion region 23, and the second expansion region 25 each have diffraction power for diffracting image light, and an embossed hologram or a volume hologram is formed. The embossed hologram is, for example, a diffraction grating. The volume hologram is, for example, an interference fringe by a dielectric film. The coupling region 21 changes the traveling direction of the image light incident from the outside to the first expansion region 23 by the diffraction power.

In the first expansion region 23, for example, diffraction grating elements are located, and image light is replicated by dividing the incident image light into image light traveling in the first direction and image light traveling to the second expansion region 25 by diffraction power. For example, in Fig. 1, in the first expansion region 23, the diffraction grating elements are located at four points 23p arranged in a direction in which the image light travels by repeating total reflection. The diffraction grating element divides the image light at each point 23p, and advances the divided image light to the second expansion region 25. As a result, the light flux of the incident image light is replicated into the light fluxes of the four image light beams in the first direction to be expanded.

In the second expansion region 25, for example, diffraction grating elements are located, and image light is replicated by dividing the incident image light into image light traveling in the second direction and image light emitted from the second expansion region 25 to the outside by diffraction power. For example, in Fig. 1, three points 25p arranged in a direction in which the image light travels by repeating total reflection are located per row in the second expansion region 25, and diffraction grating elements are located at a total of 12 points 25p in four rows. The image light is divided at each point 25p, and the divided image light is emitted to the outside. As a result, the light fluxes of the image light incident in the four rows are respectively replicated into the light fluxes of the three image light beams in the second direction to be expanded. In this way, the light guide body 13 can replicate one incident light flux of the image light into the 12 light fluxes of the image light, and can replicate the light flux in the first direction and the second direction, respectively, to expand the visual field area. From the 12 light fluxes of the image light, an observer can visually recognize the light fluxes of the respective image light beams as a virtual image, and a visual recognition region where the observer can visually recognize the image light can be widened.

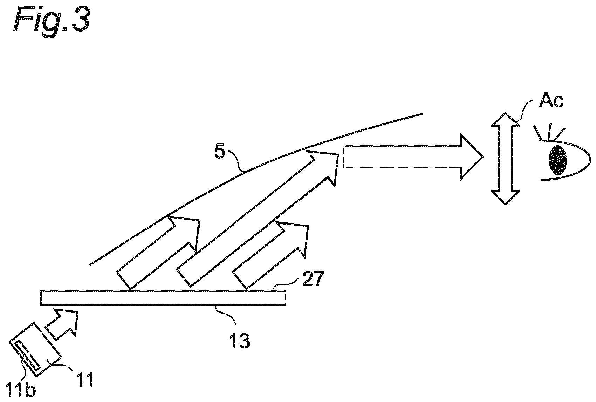

Next, a difference between a pupil expansion type HMD and a head-up display (hereinafter, referred to as an HUD) will be described with reference to Figs. 2 and 3. Fig. 2 is an explanatory view illustrating incident light and emission light of the HMD. Fig. 3 is an explanatory view illustrating incident light and emission light of the HUD.

As illustrated in Fig. 2, the light guide body 13 in the HMD substantially faces a visual recognition region Ac where the observer can view a virtual image. The image light vertically incident from the display 11 is divided in the light guide body 13, and the divided image light is vertically emitted from an emission surface 27 of the light guide body 13 toward the visual recognition region Ac.

On the other hand, as illustrated in Fig. 3, in the case of the HUD, the image light emitted from the light guide body 13 is reflected by, for example, a windshield 5 to be incident on the visual recognition region Ac, so that the divided image light is emitted in an oblique direction from the emission surface 27 of the light guide body 13. It has been newly found that, in a case where image light is reflected by the windshield 5 that is not a flat surface and is shown to an observer D, distortion occurs in a virtual image when a wavelength of the image light emitted from display 11 changes.

When a temperature of a light source 11b of the display 11 changes, the wavelength of the image light emitted from the display 11 drifts. The diffraction pitch d at which the light flux constituting the image light is diffracted, the incident angle $\alpha$, the diffraction angle $\beta$, and the wavelength $\lambda$ of the light flux satisfy the following relational expression.

$$d(\sin\alpha - \sin\beta) = m\lambda$$

Therefore, the wavelength of the image light emitted from the light source 11b is monitored, and the display position of the image on the display 11 is corrected.

As described above, the HUD is different from the HMD in that the diffraction pitch is not constant because the image light emitted from the light guide body 13 is reflected by the windshield 5 and made incident on the visual recognition region Ac, and thus, in the HUD, the distortion of the virtual image is more conspicuous due to the change in wavelength of the image light.

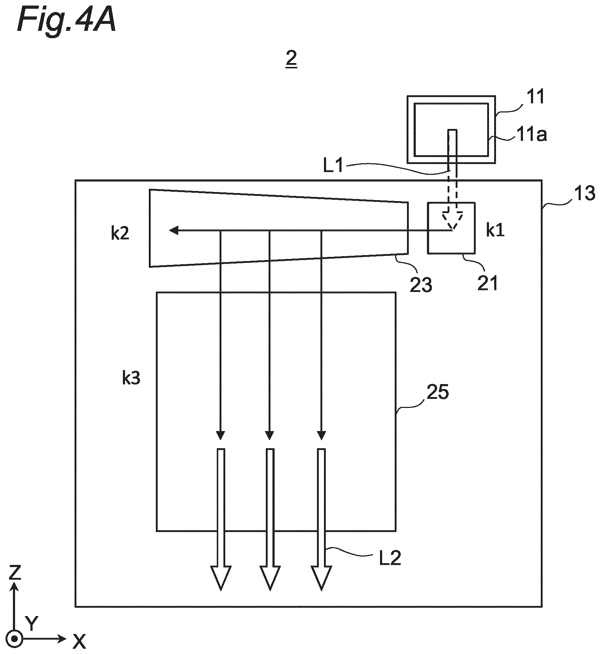

As illustrated in Fig. 4A, when a light flux L1 having the designed wavelength is incident on the light guide body 13, the traveling direction of the light flux is bent toward the first expansion region 23 in the coupling region 21. The light flux repeats duplication in the first expansion region 23, and the traveling direction of the duplicated light flux is bent toward the second expansion region 25. The light flux repeats duplication in the second expansion region 25, and is emitted from the light guide body 13 as a light flux L2 for displaying the virtual image.

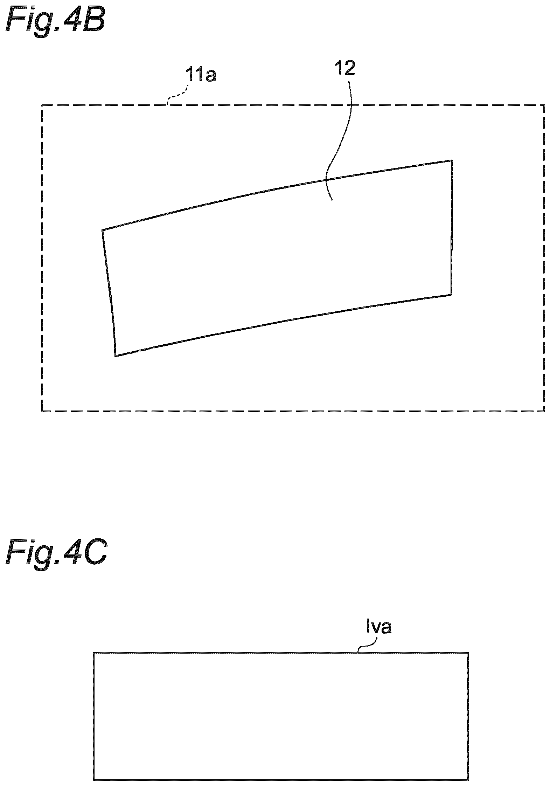

Since distortion occurs when the light flux L2 emitted from the light guide body 13 is reflected by the windshield 5, the image displayed from the display 11 is deformed in a direction opposite to the distortion in advance, so that the observer can visually recognize an image without distortion. For example, when a deformed quadrangular image 12 is displayed in a display region 11a of the display 11 as illustrated in Fig. 4B, the image 12 is duplicated by the light guide body 13 and distorted by the windshield 5, and the observer can visually recognize a rectangular virtual image Iva as designed as illustrated in Fig. 4C.

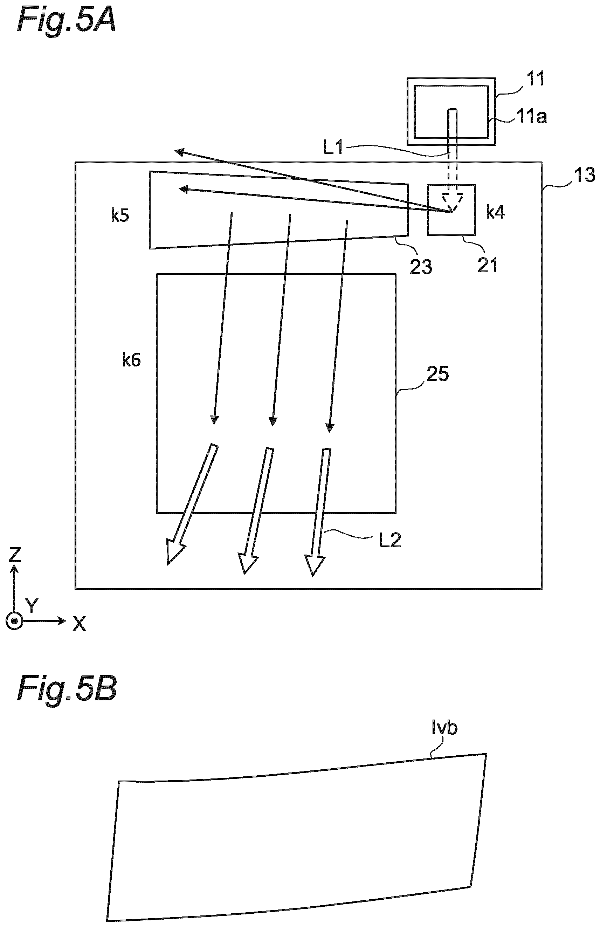

However, as the temperature of the light source 11b of the display 11 rises, the wavelength of the light flux L1 emitted from the display 11 changes. In a case where a narrow band light source such as a laser element is used as the light source 11b, for example, the wavelength becomes longer as the temperature rises. As a result, as illustrated in Fig. 5A, there is a case where the light flux diffracted in the coupling region 21 is diffracted at a diffraction angle larger than the designed diffraction angle, travels to the outside of the region of the first expansion region 23, and the light that is not diffracted to the second expansion region 25 increases. In addition, the diffraction angle increases when the light flux diffracted at a diffraction angle larger than the designed diffraction angle in the coupling region 21 is diffracted in the first expansion region 23, and further, the diffraction angle increases when the light flux is diffracted in the second expansion region 25, so that the distortion of the image increases.

As a result, before the temperature of the display 11 rises, the rectangular virtual image Iva illustrated in Fig. 4C becomes a distorted virtual image Ivb as illustrated in Fig. 5B after the temperature rises, and the observer sees the distorted virtual image Ivb. Therefore, the image display device 2 that reduces the distortion of the virtual image even when the temperature of the display 11 rises will be described.

(First Embodiment)

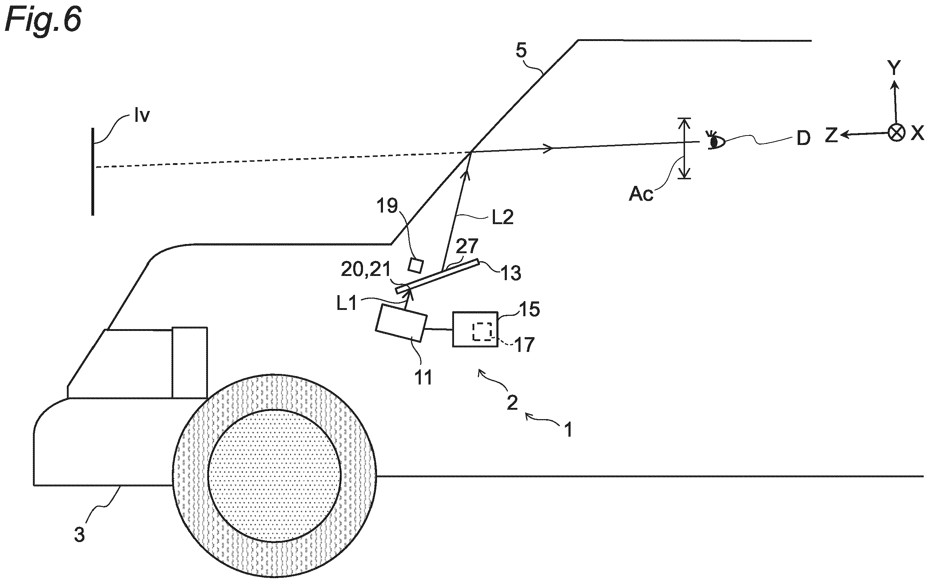

Hereinafter, a first embodiment will be described with reference to Figs. 6 to 8B. Note that components having functions common to those of the above-described components are denoted by the same reference numerals. In addition, the inclination angles of the windshield in the drawings are illustrated for easy understanding, and thus may vary depending on the drawings.

[1-1. Configuration]

[1-1-1. Overall Configuration of Image Display Device and Head-up Display System]

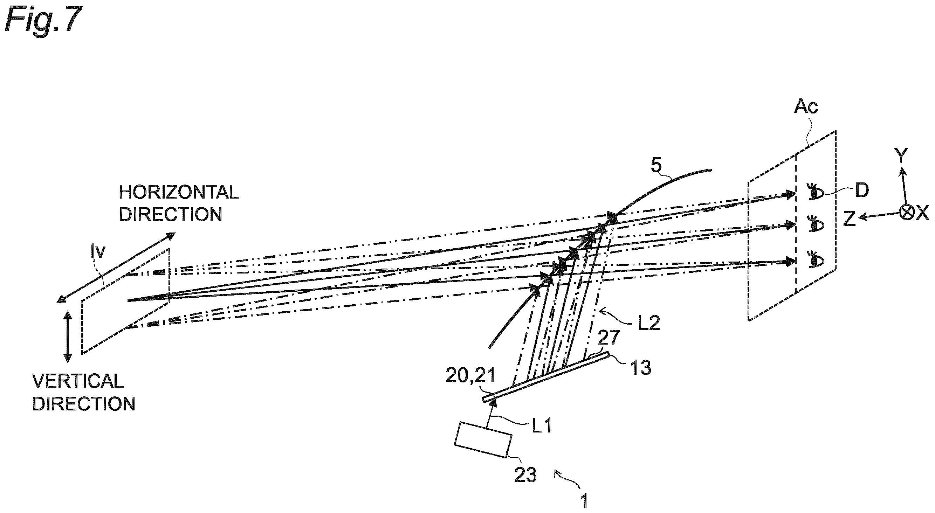

A specific embodiment of a head-up display system 1 (hereinafter, referred to as an HUD system 1) of the present disclosure will be described. Fig. 6 is a view illustrating a cross section of a vehicle 3 on which the HUD system 1 according to the present disclosure is mounted. Fig. 7 is an explanatory view illustrating an optical path of a light flux emitted from the display. In the embodiment, the HUD system 1 mounted on the vehicle 3 will be described as an example.

Hereinafter, directions related to the HUD system 1 will be described based on the X axis, the Y axis, and the Z axis illustrated in Fig. 6. The Z-axis direction is a direction in which an observer visually recognizes a virtual image Iv from the visual recognition region Ac where the observer can visually recognize the virtual image Iv. The X-axis direction is a horizontal direction orthogonal to the Z-axis. The Y-axis direction is a direction orthogonal to an XZ plane formed by the X-axis and the Z-axis. Therefore, the X-axis direction corresponds to the horizontal direction of the vehicle 3, the Y-axis direction corresponds to the substantially vertical direction of the vehicle 3, and the Z-axis direction corresponds to the substantially forward direction of the vehicle 3.

As illustrated in Fig. 6, the image display device 2 is located inside a dashboard (not illustrated) below the windshield 5 of the vehicle 3. The observer D sitting in a driver's seat of the vehicle 3 recognizes an image projected from the HUD system 1 as the virtual image Iv. In this manner, the HUD system 1 displays the virtual image Iv so as to be superimposed on a real view visually recognizable through the windshield 5. Since a plurality of replicated images are projected onto the visual recognition region Ac, the virtual image Iv can be visually recognized in the visual recognition region Ac even if the eye position of the observer D is shifted in the Y-axis direction and the X-axis direction. The observer D is a passenger riding in the moving body like the vehicle 3, and is, for example, a driver or a passenger sitting on a passenger seat.

The image display device 2 includes a display 11, a light guide body 13, a controller 15, a storage 17, and a sensor 19. The display 11 emits a light flux that forms an image visually recognized by the observer as the virtual image Iv. The light guide body 13 divides and replicates a light flux L1 emitted from the display 11, and guides the replicated light flux L2 to the windshield 5. The light flux L2 reflected by the windshield 5 is displayed as the virtual image Iv so as to be superimposed on a real view visible through the windshield 5.

The display 11 displays an image based on control by the external controller 15. As the display 11 including the light source 11b, for example, a liquid crystal display with a backlight, an organic light-emitting diode display, a plasma display, or the like can be used. In addition, a laser element may be used as the light source 11b. In addition, as the display 11, an image may be generated using a screen that diffuses or reflects light and a projector or a scanning laser. The display 11 can display image content including various types of information such as a road guidance display, a distance to a vehicle ahead, a remaining battery level of the vehicle, and a current vehicle speed. As described above, the display 11 emits the light flux L1 including the image content visually recognized by the observer D as the virtual image Iv.

The controller 15 can be implemented by a circuit including a semiconductor element or the like. The controller 15 can be configured by, for example, a microcomputer, a CPU, an MPU, a GPU, a DSP, an FPGA, or an ASIC. The controller 15 reads data and programs stored in the built-in storage 17 and performs various arithmetic processing, thereby implementing a predetermined function. Furthermore, the controller 15 includes a storage 17. The controller 15 performs correction by changing the position and shape of the image displayed from the display 11 according to the detection value of the sensor 19.

The storage 17 is a storage medium that stores programs and data necessary for implementing the functions of the controller 15. The storage 17 can be implemented by, for example, a hard disk (HDD), an SSD, a RAM, a DRAM, a ferroelectric memory, a flash memory, a magnetic disk, or a combination thereof. The storage 17 stores an image representing the virtual image Iv and shape data when the image is displayed on the display 11. In addition, a first lookup table in which a wavelength, a display position, and a shape of an image are associated with each other is stored. In addition, a second lookup table in which the amount of light detected by the sensor 19 and the wavelength of light are associated with each other is also stored. The controller 15 determines the shape of the image displayed on the display 11 based on the detection value of the sensor 19. The controller 15 reads the determined display image and shape data from the storage 17 and outputs them to the display 11.

The sensor 19 receives a light flux that is emitted from the light guide body 13 and is not visually recognized by the observer D. For example, a light flux emitted from the display 11 and propagating in an optical path branched from the optical path to the visual recognition region AD of the observer D is received. The sensor 19 detects a physical quantity used to obtain the wavelength of the light flux L1. The sensor 19 is, for example, a light detector, detects a wavelength and a light amount of received light, and transmits the detected value to the controller 15. The sensor 19 is located, for example, on a straight line connecting the display 11 and the coupling region 21.

[1-1-2. Light Guide Body]

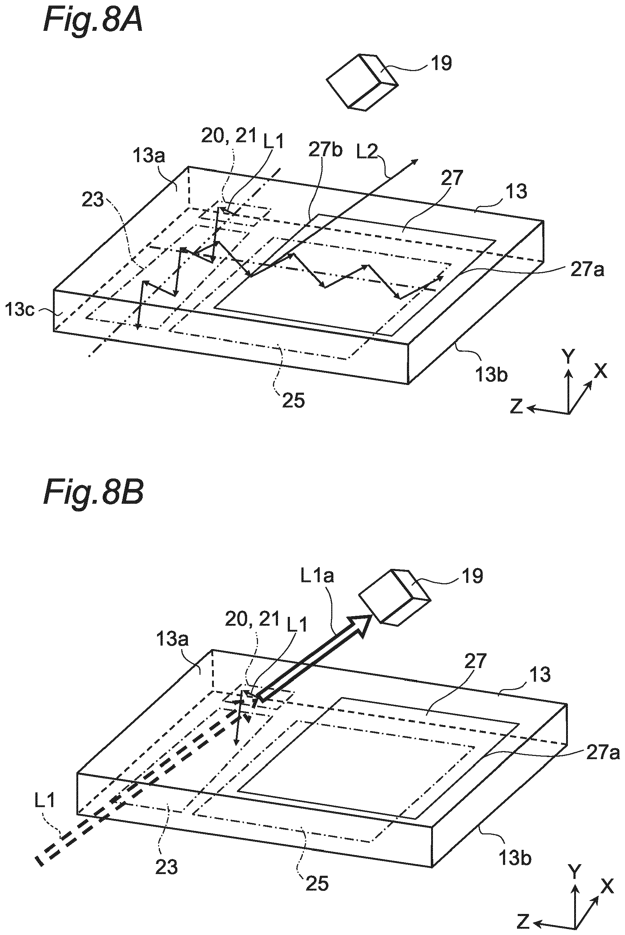

A configuration of the light guide body 13 will be described with reference to Figs. 4A and 8A. Fig. 8A is a see-through perspective view illustrating a configuration of the light guide body 13. The light guide body 13 includes a first main surface 13a, a second main surface 13b, and a side surface 13c. The first main surface 13a and the second main surface 13b face each other. The light guide body 13 includes an incident surface 20, a coupling region 21, a first expansion region 23, a second expansion region 25, and an emission surface 27. The incident surface 20 is included in the second main surface 13b, and the emission surface 27 is included in the first main surface 13a. When the coupling region 21, the first expansion region 23, and the second expansion region 25 are diffraction gratings, they are included in the second main surface 13b. When the coupling region 21, the first expansion region 23, and the second expansion region 25 are volume holograms, they are located between the first main surface 13a and the second main surface 13b.

The emission surface 27 faces the second expansion region 25. The first main surface 13a faces the windshield 5. In the present embodiment, the incident surface 20 is included in the coupling region 21, but may be included in the first main surface 13a which is a surface facing the coupling region 21. The emission surface 27 may be included in the second expansion region 25.

The coupling region 21, the first expansion region 23, and the second expansion region 25 have different diffraction powers, and a diffraction grating or a volume hologram is formed in each region. The coupling region 21, the first expansion region 23, and the second expansion region 25 have different diffraction angles of image light. In addition, the light guide body 13 has a configuration in which the incident light flux is totally reflected inside. The light guide body 13 is made of, for example, a glass or resin plate whose surface is mirror-finished. The shape of the light guide body 13 is not limited to a planar shape, and may be a curved shape. As such, the light guide body 13 includes a diffraction grating or a volume hologram that diffracts light in part. The coupling region 21, the first expansion region 23, and the second expansion region 25 are three-dimensional regions in a case where a volume hologram is included.

The coupling region 21 is a region where the light flux L1 emitted from the display 11 is incident from the incident surface 20 and the traveling direction of the light flux L1 is changed. The coupling region 21 has diffraction power and changes the propagation direction of the incident light flux L1 to the direction of the first expansion region 23. In the present embodiment, coupling is a state of propagating in the light guide body 13 under the total reflection condition. As illustrated in Fig. 8B, a light flux L1a transmitted without being diffracted in the coupling region 21 travels straight and is incident on the sensor 19 located on the extension from the display 11 to the coupling region 21.

As illustrated in Figs. 4A and 8A, the first expansion region 23 expands the light flux L1 in the first direction and emits the light flux L1 toward the second expansion region in the second direction intersecting the first direction. In the first expansion region 23 expanding the light flux L1 in the first direction, the length in the first direction is larger than the length in the second direction. The light guide body 13 is located such that the first direction is the horizontal direction (X-axis direction). The light flux L1 diffracted and propagated in the coupling region 21 is propagated in the first direction while repeating total reflection on the first main surface 13a and the second main surface 13b, and the light flux L1 is copied by the diffraction grating of the first expansion region 23 formed on the second main surface 13b and emitted to the second expansion region 25.

The second expansion region 25 expands the light flux L1 in the second direction perpendicular to the first direction, for example, and emits the expanded light flux L2 from the emission surface 27. The light guide body 13 is located such that the second direction is a negative direction of the Z axis. The light flux L1 propagated from the first expansion region 23 is propagated in the second direction while repeating total reflection on the first main surface 13a and the second main surface 13b, and the light flux L1 is copied by the diffraction grating of the second expansion region 25 formed on the second main surface 13b and emitted to the outside of the light guide body 13 via the emission surface 27.

Therefore, when viewed from the viewpoint of the observer D, the light guide body 13 expands the light flux L1 incident on the incident surface 20 and changed in the traveling direction in the horizontal direction (X-axis direction) of the virtual image Iv visually recognized by the observer D, and then further expands the light flux L1 in the vertical direction (Y-axis direction) of the virtual image Iv to emit the light flux L2 from the emission surface 27.

[1-1-3. Pupil Expansion Order]

In the light guide body 13 located as described above, the order of pupil expansion of the first embodiment will be described with reference to Figs. 4A and 8A.

The light flux L1 of the image light incident on the light guide body 13 is changed in the propagation direction to the first expansion region 23 in which pupil expansion is performed in the horizontal direction (negative direction of the X axis) as the first direction by the diffraction element formed in the coupling region 21.

Therefore, the light flux L1 is obliquely incident on the coupling region 21, and then propagates in the direction of the first expansion region 23 under the action of the wave number vector k1 illustrated in Fig. 4A.

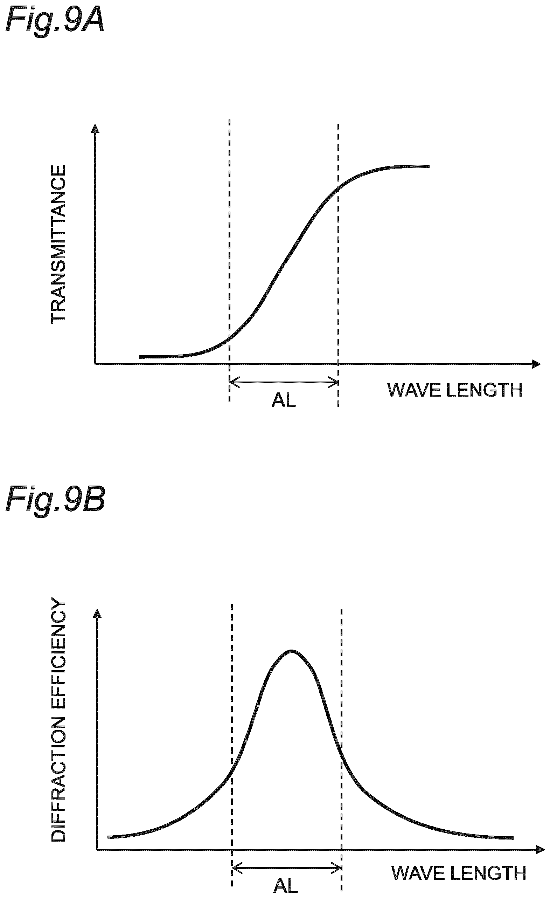

The light flux L1 propagating to the first expansion region 23 extending in the first direction is divided into the light flux L1 propagating in the first direction and the light flux L1 replicated and changed in the propagation direction to the second expansion region 25 by the diffraction element formed in the first expansion region 23 while repeating total reflection. At this time, the replicated light flux L1 propagates in the direction of the second expansion region 25 under the action of the wave number vector k2 illustrated in Fig. 9B.

The light flux L1 changed in the propagation direction to the second expansion region 25 extending along the negative direction of the Z axis as the second direction is divided into the light flux L1 propagating in the second direction and the light flux L2 replicated and emitted from the second expansion region 25 to the outside of the light guide body 13 via the emission surface 27 by the diffraction element formed in the second expansion region 25. At this time, the replicated light flux L2 propagates in the direction of the emission surface 27 under the action of the wave number vector k3 illustrated in Fig. 4A.

[1-1-4. Detection of Wavelength Change of Light]

The sensor 19 directly or indirectly detects a change in wavelength of the light flux L1. The sensor 19 includes, for example, a filter having transmittance different depending on a wavelength as illustrated in Fig. 9A. The characteristics of the filter are known in advance, and the transmittance changes in a wavelength change range AL of the light source 11b. Therefore, it is possible to detect that the wavelength of the light flux L1 has changed by changing the light amount detected by the sensor 19 while the same image is displayed from the display 11. For example, in the filter illustrated in Fig. 9A, the longer the wavelength, the larger the amount of light transmitted through the filter, and the larger the amount of light detected by the sensor 19.

In addition, as illustrated in Fig. 9B, by measuring the relationship between the wavelength change and the diffraction efficiency of the light flux L1 and in advance, the wavelength of the light flux L1 can be estimated from the amount of light that has not been diffracted. For example, since the amount of light not diffracted in the coupling region 21 is incident on the sensor 19, the wavelength of the light flux L1 can be detected by the magnitude of the amount of light detected by the sensor 19.

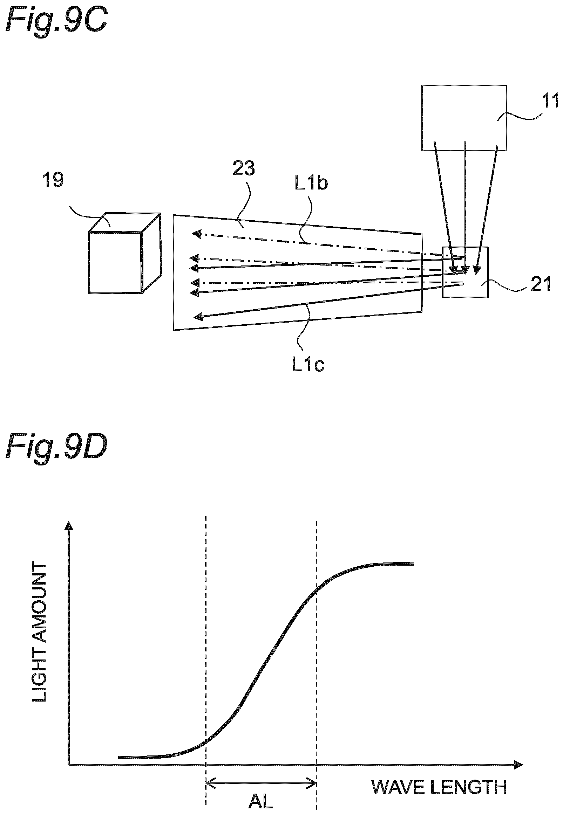

In addition, as illustrated in Fig. 9C, for example, when the sensor 19 is located on the extension from the coupling region 21 to the first expansion region 23, the diffraction angle by the coupling region 21 and the first expansion region 23 changes according to the wavelength of the light flux L1. Therefore, when the same image is displayed from the display 11, the amount of light incident on the sensor 19 changes according to the wavelength of the light flux L1. For example, at the position of the sensor 19 in Fig. 9C, since a light flux L1b having a long wavelength has a large diffraction angle, the amount of light incident on the sensor 19 is large. In addition, since a light flux L1c having a short wavelength has a small diffraction angle, the amount of light incident on the sensor 19 is small. As illustrated in Fig. 9D, by measuring the relationship between the wavelength change of the light flux L1 and the amount of light incident on the sensor 19, the wavelength of the light flux L1 can be detected from the amount of light detected by the sensor 19.

By these wavelength detection methods, the wavelength of the light flux L1 can be detected from the amount of light detected by the sensor 19. Only one of these wavelength detection methods may be used, or a combination thereof may be used.

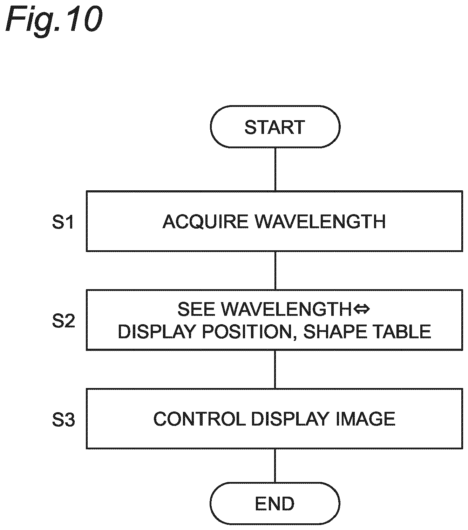

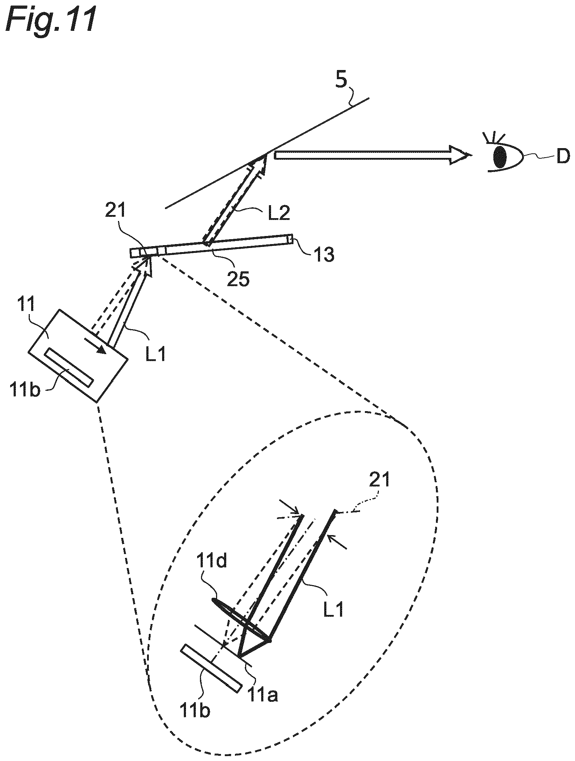

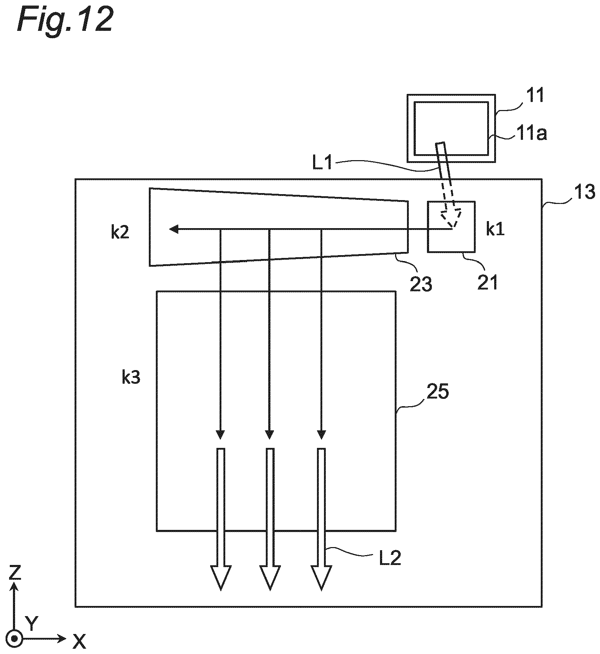

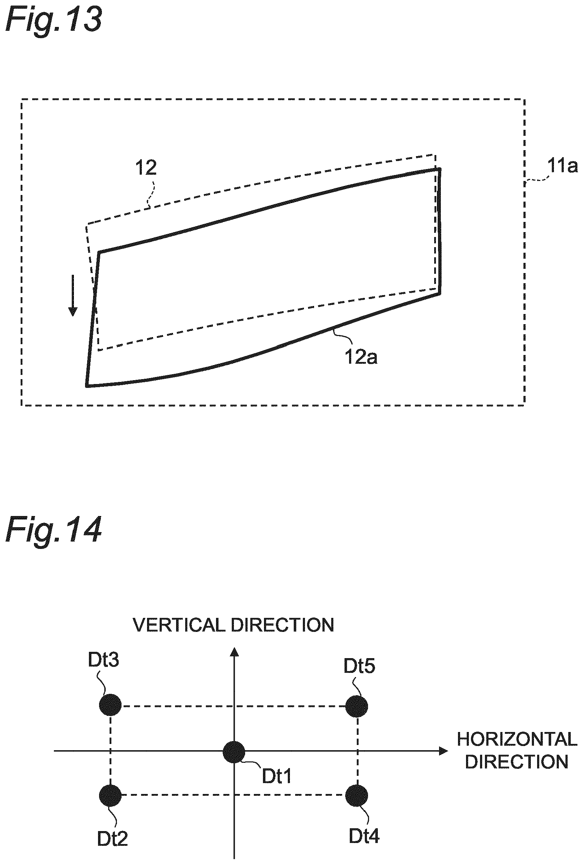

Next, a flow of image correction processing of the image display device 2 will be described with reference to Figs. 10 to 13. Fig. 10 is a flowchart illustrating the flow of the image correction processing. Figs. 11 and 12 are explanatory diagrams illustrating a change in an optical path of a light flux emitted from the display by the image correction. Fig. 13 is an explanatory diagram for explaining a change in an image displayed on the display by image correction.

In step S1, when an image is displayed from the display 11, the controller 15 acquires the light amount detected by the sensor 19 and acquires the wavelength of the light flux L1 emitted from the display 11 by referring to the second lookup table stored in the storage 17 in which the light amount and the wavelength are associated with each other.

Next, in step S2, the controller 15 refers to the first lookup table stored in the storage 17 in which the wavelength of the light flux L1 and the display position and shape of the image displayed from the display 11 are associated with each other. Next, in step S3, the controller 15 controls the image displayed from the display 11 based on the reference result of the first lookup table. For example, as illustrated in Fig. 13, the controller 15 corrects the shape and position of the image 12 displayed by the display 11 and displays an image 12a with the corrected position and shape from the display 11 based on the first lookup table so as to reduce the distortion of the image due to the light flux emitted from the light guide body 13.

For example, when the wavelength of the light flux L1 emitted from the display 11 becomes longer due to the temperature rise of the display 11, as illustrated in Figs. 11 and 12, the display position of the image is corrected downward as compared with that before the temperature rise. In a case where the display 11 is, for example, a liquid crystal display device, the controller 15 shifts the position of the light flux L1 emitted from the display region 11a of the display 11 downward corresponding to an increase in the wavelength of the light flux L1 due to a rise in the temperature, and the light flux L1 is incident on the coupling region 21 at the same entrance pupil before and after the correction by a convex lens 11d located to face the display region 11a. The convex lens 11d may be located inside or outside the display 11.

As a result, the light flux L1 incident on the light guide body 13 can be diffracted in each of the coupling region 21, the first expansion region 23, and the second expansion region 25 and emitted from the light guide body 13 at the emission angle before the temperature rises, and the observer D can see the virtual image Iv with reduced distortion.

The virtual image Iv in the first embodiment will be described with reference to Figs. 14 to 17.

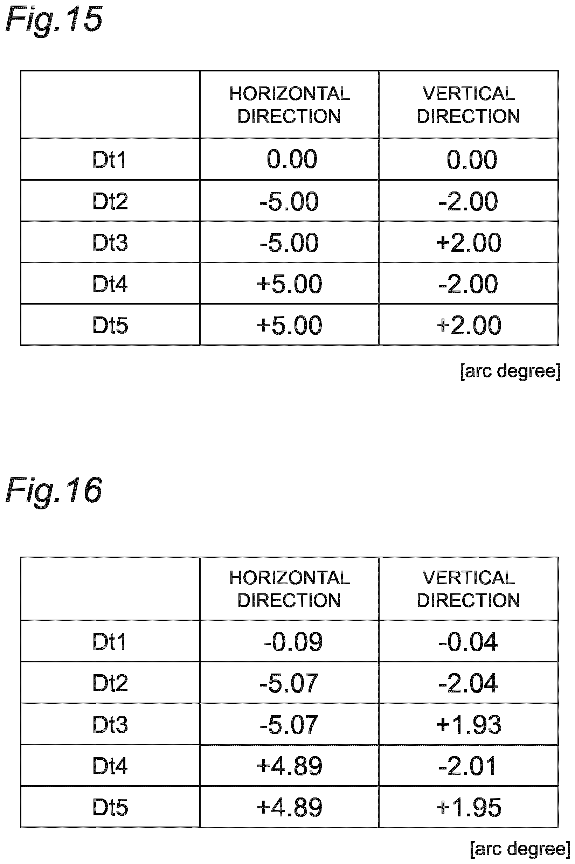

In the five dots Dt1 to Dt5 in Fig. 14, the coordinates of each dot indicated by an angle are illustrated in Fig. 15. Each of the dots Dt1 to Dt5 is displayed by the light flux L1 having a wavelength of 520 nm emitted from the display 11. The angular coordinate of the dot D1 located at the center of the screen is Dt1 (0.00, 0.00), the angular coordinate of the dot D2 located at the lower left of the screen is Dt2 (-5.00, - 2.00), and the angular coordinate of the dot D3 located at the upper left of the screen is Dt3 (-5.00, + 2.00). The angular coordinate of the dot D4 located at the lower right of the screen is Dt4 (+ 5.00, -2.00), and the angular coordinate of the dot D5 located at the upper right of the screen is Dt5 (+ 5.00, + 2.00).

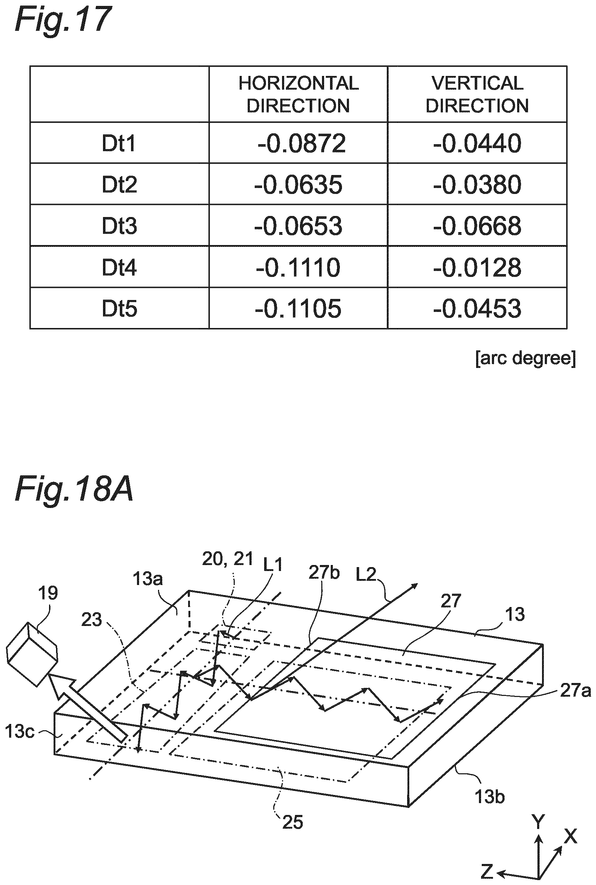

When the wavelength of the light flux L1 emitted from the display 11 is increased to 530 nm, coordinates of the dots Dt1 to Dt5 as the virtual image Iv viewed by the observer D are illustrated in Fig. 16. Fig. 17 illustrates a difference in angle when the wavelength is increased from 520 nm to 530 nm.

Fig. 16 illustrates that the position of the virtual image Iv viewed by the observer D changes when the wavelength of the light flux L1 emitted from the display 11 changes. It is understood that when the wavelength changes to a longer side, the virtual image shifts downward as a whole, and the movement amounts of the respective positions of the dots Dt2 to Dt5 at the four corners are not uniform, so that distortion occurs in the virtual image.

Furthermore, according to Fig. 17, there is an angular difference of about 0.09 degrees in the horizontal direction and about 0.04 degrees in the vertical direction at the screen center, and an angular difference of about 0.1 degrees at the maximum occurs at the screen peripheral portion. These angular differences can be sufficiently seen with normal eyesight of the observer.

Therefore, by controlling the position and shape of the image displayed on the display 11 according to the change in wavelength of the light flux L1 emitted from the display 11 by the image display device 2 of the first embodiment, the dots Dt1 to Dt5 illustrated in Fig. 14 can be displayed even if the wavelength changes from 520 nm to 530 nm. As described above, the image display device 2 of the first embodiment can reduce the movement and distortion of the virtual image.

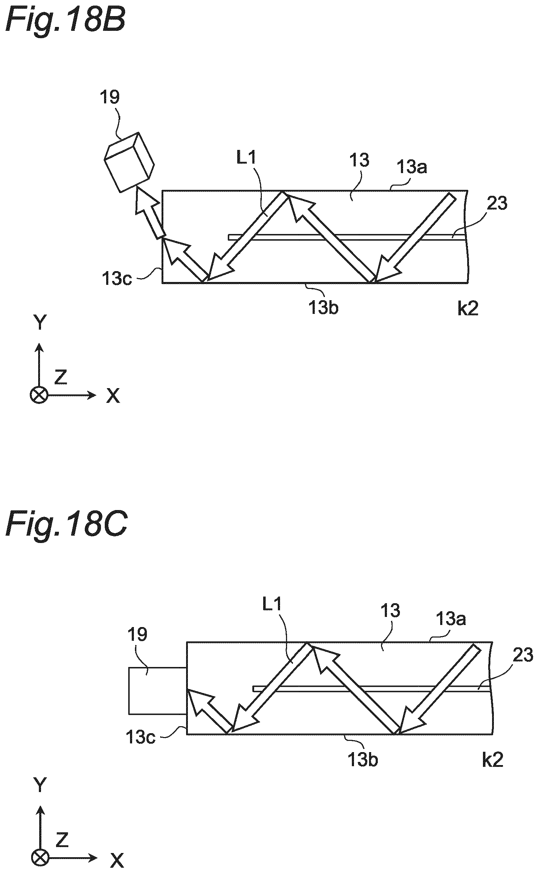

Next, a first modification of the first embodiment will be described with reference to Figs. 18A and 18B. In the first embodiment, the sensor 19 is located on the extension from the display 11 to the coupling region 21, but the present invention is not limited thereto. In the first modification, the sensor 19 is located on the extension of the first expansion region 23 in the first direction.

The side surface 13c of the light guide body 13 is on the extension of the first expansion region 23 in the first direction. When the side surface 13c is roughened, the light flux L1 incident on the side surface 13c is scattered and emitted to the outside of the light guide body 13. The sensor 19 of the first modification receives the light flux L1 emitted from the side surface 13c of the light guide body 13 by repeating total reflection without being diffracted in the first expansion region 23. Thus, the image display device 2 of the first modification can also have the same function as that of the first embodiment. In addition, as illustrated in Fig. 18 C, the sensor 19 may be brought into close contact with the side surface 13c on the extension of the first expansion region 23 in the first direction in the light guide body 13. In this case, the light flux L1 can be incident on the sensor 19 without roughening the side surface 13c.

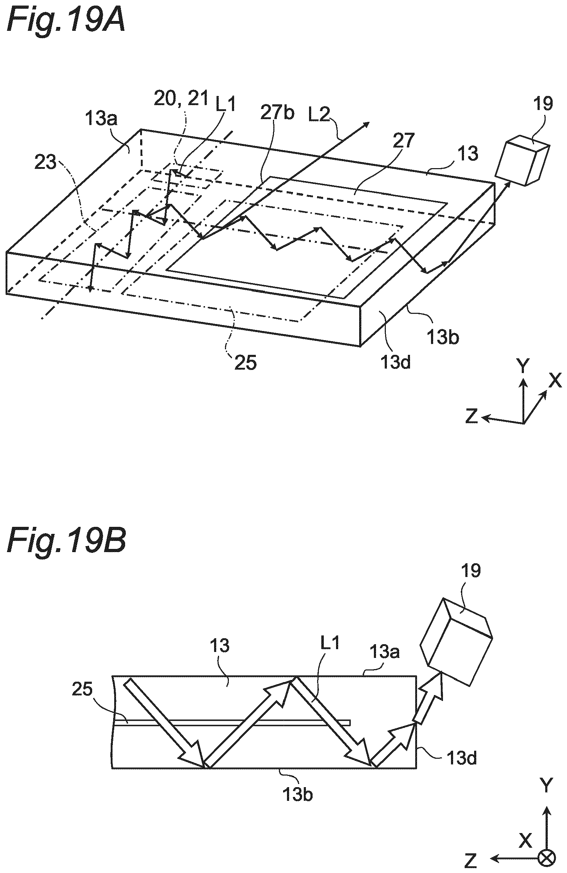

Next, a second modification of the first embodiment will be described with reference to Figs. 19A and 19B. In the first embodiment, the sensor 19 is located on the extension from the display 11 to the coupling region 21, but the present invention is not limited thereto. In the second modification, the sensor 19 is located on the extension of the second expansion region 25 in the second direction.

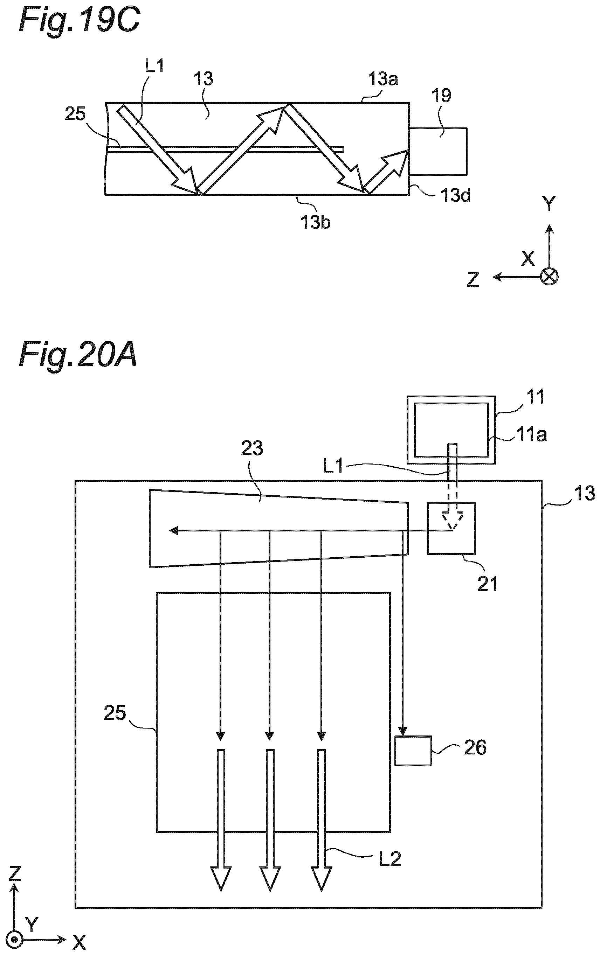

A side surface 13d of the light guide body 13 is on the extension of the second expansion region 25 in the second direction. When the side surface 13d is roughened, the light flux L1 incident on the side surface 13d is scattered and emitted to the outside of the light guide body 13. The sensor 19 of the second modification receives the light flux L1 emitted from the side surface 13d of the light guide body 13 by repeating total reflection without being diffracted in the second expansion region 25. Thus, the image display device 2 of the second modification can also have the same function as that of the first embodiment. In addition, as illustrated in Fig. 19 C, the sensor 19 may be brought into close contact with the side surface 13d on the extension of the second expansion region 25 in the second direction in the light guide body 13.

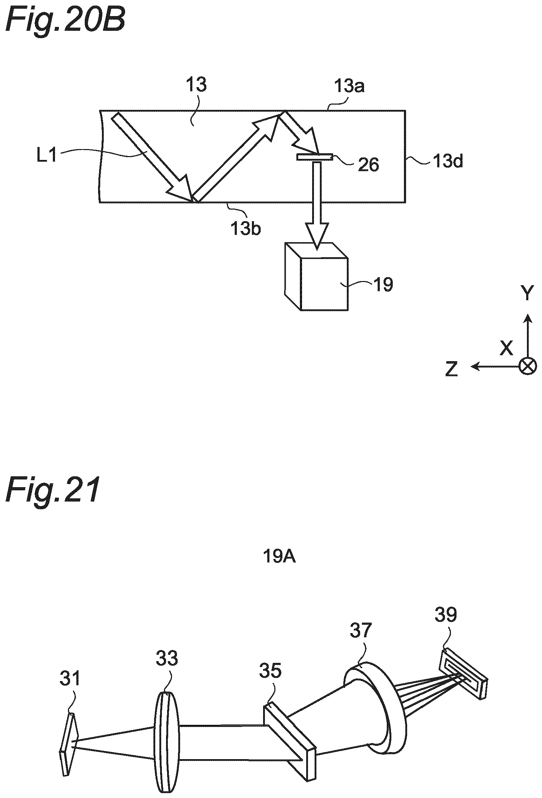

Next, a third modification of the first embodiment will be described with reference to Figs. 20A and 20B. In the third modification, the sensor 19 detects the light flux L1 diffracted from the first expansion region 23 and propagated to the outside of the second expansion region 25.

The light flux L1 of off-axis light that is not incident on the second expansion region 25 propagates in the second direction on both sides of the second expansion region 25 in the first direction. The light guide body 13 includes a diffractor 26, and for example, in Fig. 20A, the light flux L1 propagating on the coupling region 21 side of the second expansion region 25 in the light guide body 13 is diffracted downward of the light guide body 13 by the diffractor 26. As illustrated in Fig. 20B, since the sensor 19 is located below the light guide body 13, the light flux L1 diffracted by the diffractor 26 is incident on the sensor 19. Thus, the wavelength of the light flux L1 can be detected.

Next, a fourth modification of the first embodiment will be described with reference to Fig. 21. In the fourth modification, the image display device 2 may include a sensor 19A that directly detects a wavelength instead of the sensor 19 that detects a light amount.

The sensor 19A includes an incident slit 31, a collimating lens 33, a transmission grating 35, a focus lens 37, and an image sensor 39. The incident light is dispersed by the transmission grating 35, and the image sensor 39 detects the amount of light for each wavelength of the dispersed light.

Since the sensor 19A directly detects the wavelength of the light flux L1 emitted from the display 11, it is possible to accurately perform image correction according to the wavelength.

[1-2. Effects, etc.]

The image display device 2 of the present disclosure includes the display 11 that emits the light flux L1 that forms an image visually recognized by the observer D as the virtual image Iv, and the light guide body 13 that guides the light flux L1 to the windshield 5. The image display device 2 further includes the controller 15 that controls an image displayed by the display 11, and the sensor 19 that detects a physical quantity used to obtain the wavelength of the light flux L1. The light guide body 13 includes the incident surface 20 on which the light flux L1 from the display 11 is incident and the emission surface 27 from which the light flux L1 is emitted from the light guide body 13. The light flux L1 incident on the incident surface 20 of the light guide body 13 is changed in the traveling direction in the light guide body 13, and is replicated in the horizontal direction and the vertical direction of the virtual image Iv visually recognized by the observer D to be emitted from the emission surface 27 so as to expand the visual field area. The controller 15 controls the position and shape of the image displayed by the display 11 based on the physical quantity detected by the sensor 19.

Even if the wavelength of the light flux L1 emitted from the display 11 changes, the sensor 19 detects a physical quantity used to obtain the wavelength of the light flux L1, and the controller 15 controls the position and shape of the image displayed by the display 11 based on the detected physical quantity. As a result, even if the traveling direction in the light guide body 13 changes due to the change in wavelength of the light flux L1, it is possible to display a virtual image with reduced distortion by controlling the position and shape of the image displayed on the display 11.

The sensor 19 is an optical sensor, and detects a physical quantity of light by receiving a part of the light flux L1 that is not visually recognized by the observer. As a result, it is possible to obtain a physical quantity for obtaining the wavelength of the light flux while maintaining the brightness of the virtual image.

The sensor 19 may detect the wavelength of the received light. Since the sensor 19 directly detects the wavelength of light, wavelength detection accuracy can be improved.

The sensor 19 may detect the amount of received light, and the controller 15 determines the wavelength of the light of the light flux L1 based on the amount of light detected by the sensor 19. Since the light amount sensor is used as the sensor 19, the space for disposing the sensor 19 can be reduced, and the cost can be reduced.

Further, by projecting light emitted from the HUD system 1 onto the windshield 5 of the vehicle 3, the virtual image Iv suitable for the observer D riding on the vehicle 3 can be displayed.

(Second Embodiment)

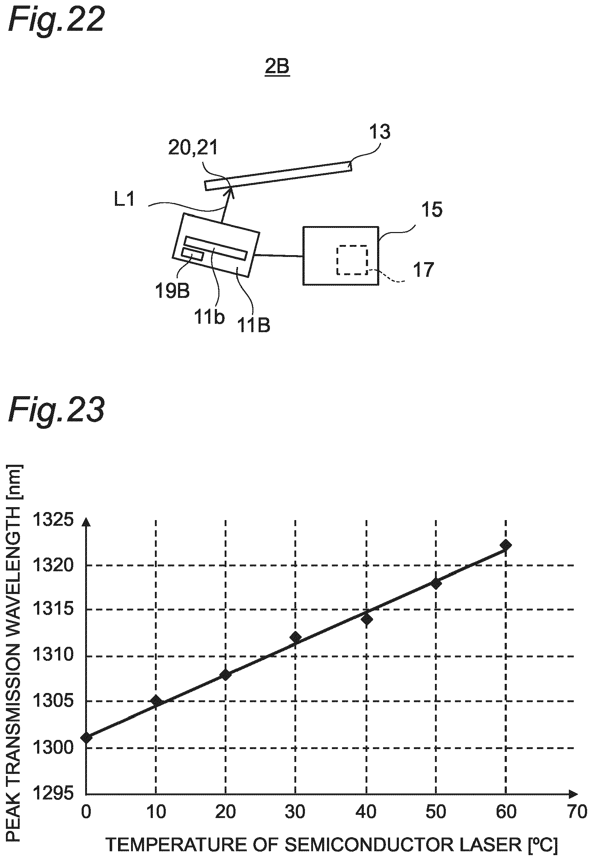

Hereinafter, a second embodiment will be described with reference to Figs. 22 and 23. In the first embodiment, the wavelength of the light flux L1 is detected from the physical quantity related to light using the sensor 19 that detects light. However, in the second embodiment, the wavelength of the light flux L1 is detected from a temperature of a display 11B using a sensor 19B that detects temperature. The configuration other than this point and the point described below is the same between the second embodiment and the first embodiment.

The sensor 19B used in the display device 2B of the second embodiment is a temperature sensor instead of a sensor that detects light, and detects the temperature of the display 11B or the temperature of the light source 11b. The sensor 19B may be located inside the display 11B or may be located on the outer surface of the display 11B. In addition, a third lookup table in which the relationship between the temperature detected by the sensor 19B and the wavelength of the light flux L1 emitted from the display 11B is associated in advance is stored in the storage 17.

Based on the temperature detected by the sensor 19B, the controller 15 determines the wavelength of the light flux L1 emitted from the display 11B with reference to the third lookup table stored in the storage 17. The sensor 19B can detect the wavelength of the light flux L1 with higher accuracy by measuring the temperature at a position as close as possible to the light emission point of the light source 11b.

The controller 15 controls the position and shape of the image displayed from the display 11B based on the determined wavelength as in the first embodiment. As a result, even if the traveling direction in the light guide body 13 changes due to the change in wavelength of the light flux L1, the virtual image Iv with reduced distortion can be displayed.

Next, a modification of the above-described second embodiment will be described. The modification of the second embodiment can also correct both the change in wavelength of the light flux L1 and the change in diffraction angle due to the temperature change of the coupling region 21, the first expansion region 23, and the second expansion region 25 by combining the second embodiment and the second modification of the first embodiment.

When the temperature of each of the coupling region 21, the first expansion region 23, and the second expansion region 25 rises, the pitch of the diffraction grating expands, and the diffraction angle of the light flux decreases. The sensor 19 detects a change in the diffraction angle due to this influence, and the sensor 19B detects a change in wavelength of the light flux L1. A correction parameter of the change in wavelength of the light flux L1 is prepared based on the detection value of the sensor 19B, and a correction parameter of the change in the diffraction angle is prepared based on the detection value of the sensor 19. A fourth lookup table of the display position and shape of the image corresponding to the two parameters is stored in advance in the storage 17. The controller 15 can correct the distortion of the virtual image with higher accuracy by controlling the position and shape of the image displayed from the display 11B based on the detection values of the sensors 19 and 19B and the third and fourth lookup tables.

(Third embodiment)

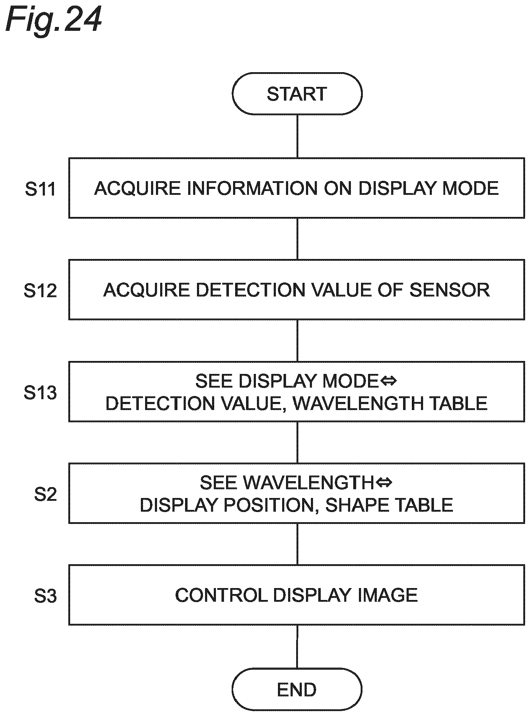

Hereinafter, a third embodiment will be described with reference to Fig. 24. In the third embodiment, the controller 15 is configured to control the display image according to the display mode of the display 11. The configuration other than this point and the point described below is the same between the third embodiment and the first embodiment.

The display mode is set according to the type of the image displayed from the display 11. The display mode is set to, for example, about five patterns according to the ratio of the light emission amount of each of red, blue, and green. In addition, a fifth lookup table in which the relationship between the detection value of the sensor 19 and the wavelength of the light flux L1 is associated according to each display mode is stored in the storage 17 in advance.

In step S11, the controller 15 acquires information on the display mode of the image displayed from the display 11. In step S12, the controller 15 acquires a detection value from the sensor 19. In step S13, the controller 15 refers to a fifth lookup table corresponding to the acquired display mode, and determines the wavelength of the light flux L1 from the acquired detection value of the sensor 19.

Next, as in the first embodiment, steps S2 and S3 are performed to control the position and shape of the image displayed from the display 11, whereby the distortion of the virtual image can be reduced.

(Other embodiments)

As described above, the embodiment has been described as an example of the technology disclosed in the present application. However, the technology in the present disclosure is not limited to this, and is applicable to embodiments in which changes, replacements, additions, omissions, and the like are appropriately made. Thus, in the following, other embodiments will be exemplified.

In the above embodiment, the sensor 19, the sensor 19A, or the sensor 19B is used. However, a plurality of sensors 19, sensors 19A, or sensors 19B may be combined, and the controller 15 may determine the wavelength of the light flux L1 based on each detection value.

In the above embodiment, the virtual image Iv is visually recognized by the observer D by reflecting the divided and replicated light flux L2 on the windshield 5, but the present invention is not limited thereto. The virtual image Iv may be visually recognized by the observer D by reflecting the divided and replicated light flux L2 on a combiner using the combiner instead of the windshield 5.

In the above embodiment, the first direction in which the light flux L1 is expanded in the first expansion region 23 and the second direction in which the light flux L1 is expanded in the second expansion region 25 are orthogonal to each other, but the present invention is not limited thereto. In expanding the light flux L1 in the first direction in the first expansion region 23, a component expanding in the horizontal direction only needs to be larger than that in the direction along the Z axis, and in expanding the light flux L1 in the second direction in the second expansion region 25, a component expanding in the direction along the Z axis only needs to be larger than that expanding in the horizontal direction.

In the above embodiment, the light flux L1 incident on the incident surface 20 is expanded in the vertical direction after being expanded in the horizontal direction of the virtual image Iv by the light guide body 13, but the present invention is not limited thereto. The light guide body 13 may expand the light flux L1 incident on the incident surface 20 and changed in the traveling direction in the vertical direction (Y-axis direction) of the virtual image Iv visually recognized by the observer D when viewed from the viewpoint of the observer D, and then further expand the light flux L1 in the horizontal direction (X-axis direction) of the virtual image Iv to emit the light flux L2 from the emission surface 27.

In the above embodiment, the case where the HUD system 1 is applied to the vehicle 3 such as an automobile has been described. However, the object to which the HUD system 1 is applied is not limited to the vehicle 3. The object to which the HUD system 1 is applied may be, for example, a train, a motorcycle, a ship, or an aircraft, or an amusement machine without movement. In the case of an amusement machine, the light flux from the display 11 is reflected by a transparent curved plate as a light-transmitting member that reflects the light flux emitted from the display 11 instead of the windshield 5. Further, the real view visually recognizable by a user through the transparent music plate may be a video displayed from another video display device. That is, a virtual image by the HUD system 1 may be displayed so as to be superimposed on a video displayed from another video display device. As described above, any one of the windshield 5, the combiner, and the transparent curved plate may be adopted as the light-transmitting member in the present disclosure.

(Outline of embodiments)

(1) An image display device of the present disclosure includes: a display that emits a light flux that forms an image visually recognized by an observer as a virtual image; a light guide body that guides the light flux to a light-transmitting member; a controller that controls the image displayed by the display; and a sensor that detects a physical quantity used to obtain a wavelength of the light flux. The light guide body includes an incident surface on which the light flux from the display is incident and an emission surface from which the light flux is emitted from the light guide body. The light flux incident on the incident surface of the light guide body is changed in a traveling direction in the light guide body, and is emitted from the emission surface so as to expand a visual field area by being replicated in a horizontal direction and a vertical direction of the virtual image visually recognized by the observer. The controller controls a position and a shape of the image displayed by the display based on the physical quantity detected by the sensor.

As a result, even if the wavelength of the light flux emitted from the display changes, the sensor detects a physical quantity used to obtain the wavelength of the light flux, and the controller controls the position and shape of the image displayed by the display based on the detected physical quantity. As a result, even if the traveling direction in the light guide body changes due to the change in wavelength of the light flux, it is possible to display a virtual image with reduced distortion by controlling the position and shape of the image displayed on the display.

(2) In the image display device of (1), the sensor is a light detector and detects a physical quantity of light.

(3) In the image display device of (2), the sensor detects a wavelength of received light.

(4) In the image display device of (3), the sensor is an image sensor having a diffraction grating.

(5) In the image display device of (2), the sensor detects an amount of received light, and the controller determines a wavelength of light of the light flux based on the light amount detected by the sensor.

(6) In the image display device of (5), the sensor includes a filter whose transmittance changes according to a wavelength.

(7) In the image display device according to any one of (1) to (6), the light guide body includes a region that guides a part of the light flux to the emission surface and a region that guides a part of the light flux to the sensor.

(8) In the image display device of (1), the sensor is a temperature detector, and detects a temperature of the display as the physical quantity, and the controller determines a wavelength of light of the light flux based on the temperature of the display.

(9) In the image display device according to any one of (1) to (8), the light guide body includes a coupling region that changes a traveling direction of a light flux incident on the incident surface, a first expansion region that replicates the light flux changed in the traveling direction in the coupling region in a first direction in the light guide body, and a second expansion region that replicates the light flux replicated in the first expansion region in a second direction intersecting the first direction in the light guide body, the coupling region, the first expansion region, and the second expansion region have different diffraction powers and diffraction angles, respectively, and the light flux replicated in the second expansion region is emitted from the emission surface.

(10) In the image display device of (9), at least one of the coupling region, the first expansion region, and the second expansion region includes a volume hologram.

(11) In the image display device of (9), the coupling region, the first expansion region, and the second expansion region are regions having diffraction structures, and have different magnitudes of wave number vectors of the respective diffraction structures.

(12) In the image display device according to any one of (1) to (11), the controller controls a position and a shape of an image so as to reduce distortion of the image due to a light flux emitted from the light guide body.

(13) A head-up display system of the present disclosure includes: the image display device according to any one of (1) to (12); and the light-transmitting member that reflects a light flux emitted from the light guide body, in which the head-up display system displays the virtual image so as to be superimposed on a real view visually recognizable through the light-transmitting member.

(14) In the head-up display of (13), the light-transmitting member is a windshield of a moving body.

## INDUSTRIAL APPLICABILITY

The present disclosure is applicable to an image display device used in a head-up display system.

## EXPLANATION OF REFERENCES

| 1 | head-up display system |
|---|---|
| 2 | image display device |
| 3 | vehicle |
| 3a | center line |
| 5 | windshield |
| 11 | display |
| 11a | display region |
| 11b | light source |
| 13 | light guide body |
| 13a | first main surface |
| 13b | second main surface |
| 13c | side surface |
| 15 | controller |
| 17 | storage |
| 18 | temperature sensor |
| 19 | sensor |
| 20 | incident surface |
| 21 | coupling region |
| 23 | first expansion region |
| 23a | point |
| 25 | second expansion region |
| 25a | point |
| 26 | diffractor |
| 27 | emission surface |
| 31 | incident slit |
| 33 | collimating lens |
| 35 | transmission grating |
| 37 | focus lens |
| 39 | image sensor |
| Ac | visual recognition region |
| D | observer |
| Iv | virtual image |
| k1, k2, k3 | wave number vector |
| L1, L2 | light flux |

## Claims

1. An image display device comprising:

a display that emits a light flux that forms an image visually recognized by an observer as a virtual image;

a light guide body that guides the light flux to a light-transmitting member;
a controller that controls the image displayed by the display; and
a sensor that detects a physical quantity used to obtain a wavelength of the light flux,
wherein the light guide body includes an incident surface on which the light flux from the display is incident and an emission surface from which the light flux is emitted from the light guide body,
wherein the light flux incident on the incident surface of the light guide body is changed in a traveling direction in the light guide body, and is emitted from the emission surface so as to expand a visual field area by being replicated in a horizontal direction and a vertical direction of the virtual image visually recognized by the observer, and
wherein the controller controls a position and a shape of the image displayed by the display based on the physical quantity detected by the sensor.

2. The image display device according to claim 1, wherein the sensor is a light detector and detects a physical quantity of light.

3. The image display device according to claim 2, wherein the sensor detects a wavelength of received light.

4. The image display device according to claim 3, wherein the sensor is an image sensor having a diffraction grating.

5. The image display device according to claim 2,

wherein the sensor detects an amount of received light, and
wherein the controller determines a wavelength of light of the light flux based on the light amount detected by the sensor.

6. The image display device according to claim 5, wherein the sensor includes a filter whose transmittance changes according to the wavelength.

7. The image display device according to any one of claims 1 to 6, wherein the light guide body includes a region that guides a part of the light flux to the emission surface and a region that guides a part of the light flux to the sensor.

8. The image display device according to claim 1,

wherein the sensor is a temperature detector, and detects a temperature of the display as the physical quantity, and

wherein the controller determines a wavelength of light of the light flux based on the temperature of the display.

9. The image display device according to any one of claims 1 to 8,

wherein the light guide body includes a coupling region that changes a traveling direction of the light flux incident on the incident surface, a first expansion region that replicates the light flux changed in the traveling direction in the coupling region in a first direction in the light guide body, and a second expansion region that replicates the light flux replicated in the first expansion region in a second direction intersecting the first direction in the light guide body, wherein the coupling region, the first expansion region, and the second expansion region have different diffraction powers and diffraction angles, respectively, and wherein the light flux replicated in the second expansion region is emitted from the emission surface.

10. The image display device according to claim 9, wherein at least one of the coupling region, the first expansion region, and the second expansion region includes a volume hologram.

11. The image display device according to claim 9, wherein the coupling region, the first expansion region, and the second expansion region are regions having diffraction structures, and have different magnitudes of wave number vectors of the respective diffraction structures.

12. The image display device according to any one of claims 1 to 11, wherein the controller controls the position and the shape of the image so as to reduce distortion of the image due to the light flux emitted from the light guide body.

13. A head-up display system comprising:

the image display device according to any one of claims 1 to 12; and the light-transmitting member that reflects the light flux emitted from the light guide body, wherein the head-up display system displays the virtual image so as to be superimposed on a real view visually recognizable through the light-transmitting member.

14. The head-up display system according to claim 13, wherein the light-transmitting member is a windshield of a moving body.

*Fig.1*

*Fig.2*

# Fig.3

Fig.4A

2

*Fig.4B*

11a        12

*Fig.4C*

Iva

*Fig.5A*

*Fig.5B*

Fig.6

EP 4 357 836 A1

Fig.7

HORIZONTAL DIRECTION

VERTICAL DIRECTION

EP 4 357 836 A1

## Fig.8A

## Fig.8B

*Fig.9A*

*Fig.9B*

*Fig.9C*

19    23    L1b    11

21

L1c

*Fig.9D*

LIGHT AMOUNT

AL

WAVE LENGTH

*Fig.10*

```
        ┌─────────────┐
        │    START    │
        └─────────────┘
               │
   ┌───────────────────────────────────┐
S1 │       ACQUIRE WAVELENGTH          │
   └───────────────────────────────────┘
               │
   ┌───────────────────────────────────┐
   │         SEE WAVELENGTH⇔            │
S2 │   DISPLAY POSITION, SHAPE TABLE   │
   └───────────────────────────────────┘
               │
   ┌───────────────────────────────────┐
S3 │      CONTROL DISPLAY IMAGE        │
   └───────────────────────────────────┘
               │
        ┌─────────────┐
        │     END     │
        └─────────────┘
```

*Fig.11*

*Fig.12*

*Fig.13*

*Fig.14*

*Fig.15*

|  | HORIZONTAL DIRECTION | VERTICAL DIRECTION |
|---|---|---|
| Dt1 | 0.00 | 0.00 |
| Dt2 | -5.00 | -2.00 |
| Dt3 | -5.00 | +2.00 |
| Dt4 | +5.00 | -2.00 |
| Dt5 | +5.00 | +2.00 |

[arc degree]

*Fig.16*

|  | HORIZONTAL DIRECTION | VERTICAL DIRECTION |
|---|---|---|
| Dt1 | -0.09 | -0.04 |
| Dt2 | -5.07 | -2.04 |
| Dt3 | -5.07 | +1.93 |
| Dt4 | +4.89 | -2.01 |
| Dt5 | +4.89 | +1.95 |

[arc degree]

## Fig.17

|  | HORIZONTAL DIRECTION | VERTICAL DIRECTION |
|---|---|---|
| Dt1 | -0.0872 | -0.0440 |
| Dt2 | -0.0635 | -0.0380 |
| Dt3 | -0.0653 | -0.0668 |
| Dt4 | -0.1110 | -0.0128 |
| Dt5 | -0.1105 | -0.0453 |

[arc degree]

## Fig.18A

*Fig.18B*

*Fig.18C*

*Fig.19A*

*Fig.19B*

*Fig.19C*

*Fig.20A*

*Fig.20B*

*Fig.21*

# Fig.22

# Fig.23

# Fig.24

```
                    ┌─────────────┐
                    │    START    │
                    └──────┬──────┘
                           │
      ┌────────────────────┴────────────────────────┐
  S11 │    ACQUIRE INFORMATION ON DISPLAY MODE       │
      └────────────────────┬────────────────────────┘
                           │
      ┌────────────────────┴────────────────────────┐
  S12 │    ACQUIRE DETECTION VALUE OF SENSOR         │
      └────────────────────┬────────────────────────┘
                           │
      ┌────────────────────┴────────────────────────┐
      │             SEE DISPLAY MODE⇔                │
  S13 │   DETECTION VALUE, WAVELENGTH TABLE          │
      └────────────────────┬────────────────────────┘
                           │
      ┌────────────────────┴────────────────────────┐
      │             SEE WAVELENGTH⇔                  │
  S2  │   DISPLAY POSITION, SHAPE TABLE              │
      └────────────────────┬────────────────────────┘
                           │
      ┌────────────────────┴────────────────────────┐
  S3  │         CONTROL DISPLAY IMAGE                │
      └────────────────────┬────────────────────────┘
                           │
                    ┌──────┴──────┐
                    │     END     │
                    └─────────────┘
```

## INTERNATIONAL SEARCH REPORT

International application No.

**PCT/JP2022/016246**

### A. CLASSIFICATION OF SUBJECT MATTER

*G02B 27/01*(2006.01)i; *B60R 11/02*(2006.01)i; *G02B 27/02*(2006.01)i
FI:    G02B27/01; G02B27/02 Z; B60R11/02 C

According to International Patent Classification (IPC) or to both national classification and IPC

### B. FIELDS SEARCHED

Minimum documentation searched (classification system followed by classification symbols)

G02B27/01; B60R11/02; G02B27/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2021/0096365 A1 (CONTINENTAL AUTOMOTIVE GMBH) 01 April 2021 (2021-04-01)<br>        paragraphs [0035]-[0043], fig. 1-4 | 1-14 |
| Y | DE 102016206137 A1 (ROBERT BOSCH GMBH) 19 October 2017 (2017-10-19)<br>        paragraphs [0031]-[0065], fig. 1-6 | 1-14 |
| Y | JP 2011-90076 A (PANASONIC CORP) 06 May 2011 (2011-05-06)<br>        paragraphs [0020]-[0068], fig. 2-11(b) | 5-14 |
| A | US 2020/0241473 A1 (DUALITAS LTD) 30 July 2020 (2020-07-30)<br>        entire text, all drawings | 1-14 |
| A | US 2021/0132379 A1 (VISION TECHNICS UG (HAFTUNGSBESCHRAENKT)) 06 May 2021 (2021-05-06)<br>        entire text, all drawings | 1-14 |
| A | JP 2021-56357 A (NIPPON SEIKI CO LTD) 08 April 2021 (2021-04-08)<br>        entire text, all drawings | 1-14 |

☐ Further documents are listed in the continuation of Box C.      ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/016246**

| Patent document cited in search report | | | Publication date (day/month/year) | Patent family member(s) | | | Publication date (day/month/year) |
|---|---|---|---|---|---|---|---|
| US | 2021/0096365 | A1 | 01 April 2021 | WO 2019/238877 A1 p. 9, line 5 to p. 12, line 12, fig. 1-4 | | | |
| DE | 102016206137 | A1 | 19 October 2017 | (Family: none) | | | |
| JP | 2011-90076 | A | 06 May 2011 | (Family: none) | | | |
| US | 2020/0241473 | A1 | 30 July 2020 | GB 2580696 A entire text, all drawings EP 3686692 A1 CN 111486975 A | | | |
| US | 2021/0132379 | A1 | 06 May 2021 | WO 2018/162337 A1 entire text, all drawings DE 102017002229 A1 CN 110709753 A | | | |
| JP | 2021-56357 | A | 08 April 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10429645 B

- WO 2018198587 A